# EUROPEAN PATENT APPLICATION

(11) **EP 0 836 987 A2**
(43) Date of publication of application: **22.04.1998**
(21) Application number: 97308106.0
(22) Date of filing: 13.10.1997
(51) Int. Cl.: B63H 21/32, B63G 9/00

(54) **Exhaust gas discharge system and method**

(30) Priority: 18.10.1996 GB 9621761
(71) Applicant: VOSPER THORNYCROFT (UK) LTD., Woolston Southampton S019 9RR (GB)
(72) Inventor: Wood, David William, Waterlooville/Hants PO7 5HF (GB)
(74) Representative: Cheyne, John Robert Alexander Mackenzie

(57) **Abstract**

A method of treating exhaust gases discharged from a combustion engine (1) of a marine vessel (2) includes injecting into the exhaust gases a cloud of water droplets. The exhaust gases are removed from the engine (1) along a tubular member (3) and thence discharged to the atmosphere just above the water line (4) of the vessel (2). The cloud of water droplets is injected through a plurality of nozzles (5) in the periphery of the tubular member (3). Because of the high surface area of the water cloud, the exhaust gases passing along the tubular member (3) are cooled down such that the final discharge (6) has a sufficiently low temperature to make thermal detection difficult.

## Description

This invention relates to exhaust systems and more particularly, but not exclusively, is concerned with exhaust systems for discharging exhaust gases from a combustion engine in a marine vessel.

A large proportion of warships are fitted with optronic sensors and thermal imaging sensors for tracking and/or surveillance purposes. Also, many land based systems use the resolution of optical systems and warships conducting littoral operations will be threatened by such systems. Aircraft are fitted with optronic systems, for air and surface attack, and with the resolution advantages offered it is only a matter of time before optronic control will be incorporated into surface-to-surface missiles (SSM's) at sea.

The sensitivity of thermal sensors is improving at a rapid rate. They can now distinguish temperature differentials of below one degree Celsius. They respond to emissions from hot areas such as exhaust systems discharging exhaust gases from the engines of ships, especially when the exhaust gas stream contains hot particles. Normally, the exhaust gases are pumped into a tubular member and cooling water is introduced. Thus the exhaust gases leaving the pipe are in admixture with dirty water and steam and the latter can be detected very readily by thermal sensors. Steam formation can be avoided by discharging the exhaust gases underwater but this causes bubbles to be formed which can themselves be detected.

It is an object of the present invention to cool exhaust gases in a manner such as to avoid the emission of components which may be detected by thermal sensors.

It is another object of the present invention to clean exhaust gases by removing particulate matter. Embodiments of the invention preferably enable both objects to be fulfilled.

According to one aspect of the present invention there is provided a method of treating exhaust gases discharged from a combustion engine, which method includes the step of injecting into the exhaust gases a cloud of water droplets.

According to another aspect of the present invention there is provided an exhaust system for discharging exhaust gases from a combustion engine, which exhaust system comprises a tubular member along which the gases pass wherein the tubular member includes a plurality of nozzles for injecting water into the gases in the form of a cloud of water droplets.

In the case where the exhaust gases are produced by a marine vessel, the water used to form the cloud will, usually, be sea water and in a particularly preferred embodiment the mean particle size of the water droplets is less than 1mm. Preferably, the treated exhaust gases exit just above the water line and advantageously the exit point of the gases will be enveloped in a cloud of water droplets of suitable size to further minimize detection by thermal sensors.

The injection of a water fog into the exhaust gases in this way provides a more efficient cooling and cleaning of the exhaust gases. In this regard, the water fog or cloud presents a large cooling surface thereby giving more efficient cooling. By ensuring that the exhaust gases exit at a temperature of the order of 80°C or less, the water in the discharge gases is in the form of water droplets rather than steam which is more readily detectable by thermal sensors.

The water fog introduced into the exhaust stream also has the effect of both cooling the particulate matter in the exhaust flow and removing that matter from the gas flow by trapping it in the water droplets produced by the fog cloud.

In an embodiment, the water (and carbon particles etc) are removed from the exhaust gases after treatment so that the gaseous discharge is essential dry.

For a better understanding of the invention and to show how the same may be carried into effect, reference will now be made, by way of example, to the accompanying drawings in which:
Figure 1 shows a diagrammatic sketch of an exhaust system in accordance with the present invention; and
Figure 2 shows a second exhaust system in accordance with the present invention.

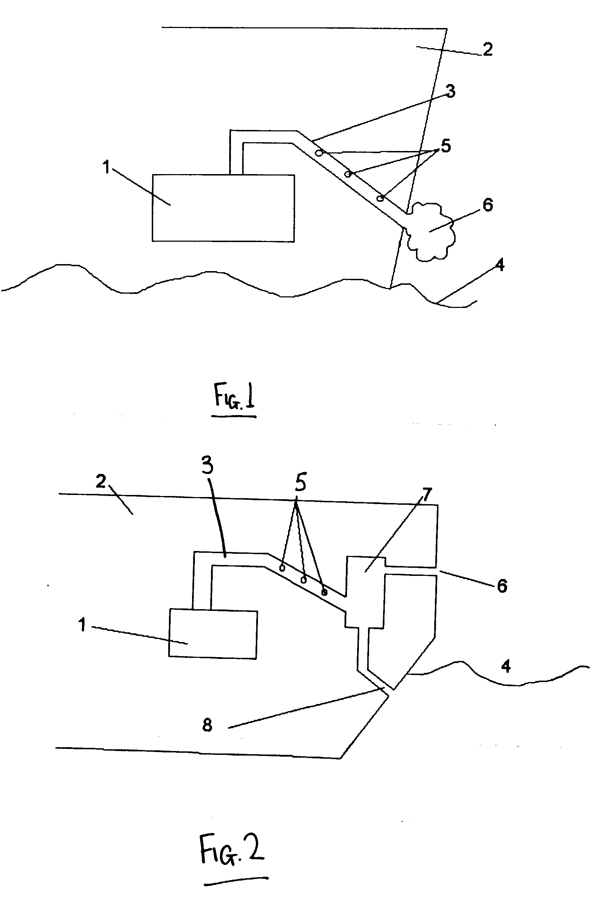

In Figure 1, there is shown an internal combustion engine 1 for, for example, driving an electrical generator for powering an electrical propulsion system of a marine vessel 2. The exhaust gases are removed from the engine 1 along a tubular member 3 and thence discharged to the atmosphere just above the water line 4 of the vessel. The tubular member 3 includes, in its periphery, a plurality of nozzles 5 and pipework (not shown) is provided to enable sea water to be pumped through the nozzles and into the tubular member. The pressure of the water and the size of the nozzles are selected such that the water entering into the tubular member 3 via the nozzles is in the form of a cloud of water droplets preferably having a mean size of less than 1mm. Because of the high surface area of the water cloud, the water droplets efficiently cool the exhaust gases passing along the tubular member 3 and rapidly reduce the temperature so that the final discharge 6 exiting from the tubular member 3 has a sufficiently low temperature to make detection difficult.

If desired, the water may be removed from the treated exhaust gases so that the discharge is essentially dry and clean. As shown in Figure 2, after being cooled by the water fog, the exhaust gases can be passed through a separator 7. The dry exhaust is discharged to the atmosphere 6, and the separated cooling water is discharged into the sea 8. Alternatively, the cooling water can be filtered before returning to the sea in order to remove the particulate matter. Such filtration may be desirable to prevent pollution.

Instead of the exhaust gases being discharged just above the water line, they may be discharged up the vessel's funnel, or other uptake to the atmosphere.

## Claims

1. A method of treating exhaust gases discharged from a combustion engine, which method includes the step of injecting into the exhaust gases a cloud of water droplets.

2. An exhaust system for discharging exhaust gases from a combustion engine, which exhaust system comprises a tubular member along which the gases pass, wherein the tubular member includes a plurality of nozzles for injecting water into the gases in the form of a cloud of water droplets.

3. A method as claimed in claim 1, or a system as claimed in claim 2, wherein the exhaust gases are produced by a marine vessel, and the water used to form the cloud is sea water.

4. A method or system as claimed in claim 3, wherein the treated exhaust gases exit just above the water line of the marine vessel, the exit point of the gases being enveloped in a cloud of water droplets.

5. A method as claimed in claim 1, 3 or 4, or a system as claimed in claim 2, 3 or 4, wherein the mean particle size of the water droplets is less than 1 mm.
